# EUROPÄISCHE PATENTANMELDUNG

(11) **EP 2 682 223 A2**
(43) Veröffentlichungstag der Anmeldung: **08.01.2014**
(21) Anmeldenummer: 13174542.4
(22) Anmeldetag: 01.07.2013
(51) Int. Cl.: B23K 37/02

(54) **Verfahren und Vorrichtung zum Einbringen einer Türöffnung in ein bogenförmiges Stahlsegment, insbesondere in ein Turmsegment einer Windkraftanlage**

(30) Priorität: 03.07.2012 DE 102012105915
(71) Anmelder: Lehnert, Sebastian, 06846 Dessau-Roßlau (DE)
(72) Erfinder: Lehnert, Sebastian, 06846 Dessau-Roßlau (DE)
(74) Vertreter: Tragsdorf, Bodo

(57) **Zusammenfassung**

Die Erfindung bezieht sich auf ein Verfahren und eine Vorrichtung zum Einbringen einer Türöffnung in ein bogenförmiges Stahlsegment, insbesondere in ein Turmsegment einer Windkraftanlage, einschließlich Zargenmontage.

Ausgehend von den Nachteilen des bekannten Standes der Technik soll eine Lösung geschaffen werden, mit der der Zeitaufwand zum Ausbrennen der Türöffnungen reduziert werden kann und sich eine verbesserte Qualität des Brennschnittes erzielen lässt.

Die Verfahrensweise wird mittels einer Vorrichtung realisiert, die mindestens eine Führungseinheit (1) und eine Trenneinheit (2) umfasst, wobei die Führungseinheit (1) aus einem Trägerrahmen (4) und einem an diesem horizontal verschiebbar angeordneten Fahrwerk (5) besteht, das auf der Stirnseite der Zarge umlaufend verfahrbar ist. Die Trenneinheit (2) ist vertikal verschiebbar an dem Trägerrahmen (4) gelagert, wobei die Trenneinheit (2) mit einer Schneideinrichtung (23) ausgerüstet ist, die über Strukturabtastelemente (25, 28) während des Betriebszustandes in ihrer Position sowohl in vertikaler Richtung als auch in der Winkelstellung derart veränderbar ist, dass während des Schneidvorganges eine dynamische Trennfase entsteht.

## Beschreibung

Die Erfindung bezieht sich auf ein Verfahren zum Einbringen einer Türöffnung in ein bogenförmiges Stahlsegment, insbesondere in ein Turmsegment einer Windkraftanlage, einschließlich Zargenmontage. Ferner bezieht sich die Erfindung auf eine zur Durchführung des Verfahrens geeignete Vorrichtung zum Einbringen der Türöffnung.

Türme für Windkraftanlagen werden in der Regel aus mehreren rohrförmigen Turmabschnitten zusammengesetzt.

Im unteren Teil des Turmes befindet sich eine verschließbare Tür, um einen Zutritt in den Innenraum des Turmes, insbesondere für Wartungs- und Instandhaltungsarbeiten, zu ermöglichen.

Zum Aufhängen der Tür muss in die vorbereitete Türöffnung eine Türzarge eingeschweißt werden. Außerdem wird um die Türöffnung noch eine Verstärkung angebracht, um die durch die Türöffnung bedingte statische Schwächung auszugleichen.

Die Bauelemente für die Turmabschnitte, die eine Höhe von beispielsweise 3 m besitzen, werden aus bogenförmig gewalzten Stahlblechsegmenten hergestellt, die miteinander zu einem rohrförmigen Turmabschnitt verschweißt werden.

Die Durchgangsöffnung für eine Tür wird in das gewalzte Stahlblechsegment geschnitten. Die zur Aufnahme der Tür bestimmte Zarge wird eingeschweißt (DE 101 52 550 A1). Aus Stabilitätsgründen besitzt die Türöffnung in den meisten Fällen eine ovale Form.

Die Einbringung der Türöffnung in das bogenförmig gewalzte Stahlblechsegment ist mit einem hohen manuellen Aufwand verbunden.

Aus der Praxis ist hierzu folgende Vorgehensweise bekannt.

Die Form der Türzarge wird auf der Außenseite des Stahlblechsegmentes manuell angerissen. Zur Manipulation der Zarge ist der Einsatz eines Kranes erforderlich.

Die Türöffnung wird anschließend mittels eines motorisch betriebenen Autogen-Handschneidbrenners ausgebrannt. Dieser Prozess ist sehr zeitaufwendig. Die Schnittkanten müssen vor dem Einbau der Zarge nachbearbeitet werden. Die Nachteile liegen vor allem im zeitlichen Aufwand und in der erzeugten Brennschnittqualität.

Außerdem lassen sich bei der Herstellung der jeweiligen Zargen geringe Abweichungen in den Abmessungen, insbesondere im Bereich der Rundungen, nicht vermeiden.

Dies hat zu Folge, dass die Öffnungen für den Einbau der Zargen durch aufwendige Nacharbeiten angepasst werden müssen.

Der Erfindung liegt die Aufgabe zugrunde, ein Verfahren zum Einbringen einer Türöffnung in ein bogenförmiges oder gekrümmtes Stahlsegment, insbesondere in ein Turmsegment einer Windkraftanlage, einschließlich Montage einer Zarge aus Stahl zu schaffen, mit dem sich eine verbesserte Qualität des Brennschnittes erzielen lässt und der Zeitaufwand zum Ausbrennen der Türöffnung reduziert werden kann.

Ferner soll eine zur Durchführung des Verfahrens geeignete Vorrichtung zum Einbringen der Türöffnung geschaffen werden.

Erfindungsgemäß wird die Aufgabe durch die im Anspruch 1 angegebene Verfahrensschritte gelöst. Vorteilhafte Weiterbildungen der vorgeschlagenen Verfahrensweise sind Gegenstand der Ansprüche 2 bis 5.

Eine zur Durchführung des Verfahrens geeignete Vorrichtung ist Gegenstand von Anspruch 6. Die Ansprüche 7 bis 13 betreffen vorteilhafte Ausgestaltungen der beanspruchten Vorrichtung.

Gemäß der vorgeschlagenen Verfahrensweise wird eine vorgefertigte Zarge stirnseitig auf der Innenseite eines bogenförmigen Stahlsegmentes positioniert. Danach wird auf der nach oben zeigenden Stirnseite der Zarge eine fahrbare Führungseinheit mit einer vertikal verstellbaren Trenneinheit aufgesetzt. Der Brenner der Trenneinheit ist in seinem Brennerwinkel verstellbar. Nach der Montage der Führungs- und Trenneinheit wird die Führungseinheit in Vorschubrichtung bewegt und der Brenner in Betrieb genommen. Während der Vorschubbewegung passt der Brenner selbständig seine Position an die Krümmung des Stahlsegmentes an. Dabei wird die Öffnung zur Aufnahme der Zarge in das Stahlsegment eingebracht. Nach Beendigung eines umlaufenden Fahrzyklus wird die Zarge angehoben und das ausgebrannte Teilstück entfernt. Anschließend wird die Zarge in die ausgebrannte Öffnung des Stahlsegmentes eingelassen und mit diesem verschweißt.

Die Bewegungsmöglichkeit der Führungseinheit erfordert, dass die zum Einsatz kommenden Zargen in ihrer Querschnittsform keine eckigen, sondern nur runde Übergänge aufweisen. Die Zargen können z.B. kreisrund, oval oder elliptisch ausgeführt sein. Vorzugsweis wird der Abstand zwischen Brenner und Außenwand der Zarge unter Berücksichtigung eines Luftspaltabstandes eingestellt, damit die Zarge passgenau in die ausgebrannte Öffnung eingesetzt werden kann. Die Größe des Luftspaltabstandes ist von der Dicke des Stahlsegmentes abhängig. Je dicker das Stahlsegment desto größer ist der Luftspaltabstand.

Ein Vorteil der erfindungsgemäßen Verfahrensweise ist, dass diese unabhängig von den Toleranzen der Zargen in der Querschnittsgeometrie universell eingesetzt werden kann. In der Praxis ist es nicht möglich, bei der serienmäßigen Fertigung der Zargen vorgegebene Toleranzen einzuhalten. Jede Zarge ist somit ein Unikat.

Die Fertigungszeiten für das Ausbrennen der Öffnungen, das Einsetzen der Zargen und den abschließenden Schweißvorgang können nunmehr erheblich gesenkt werden. Während der Bewegung der Führungseinheit in Vorschubrichtung wird die momentane Krümmung des Stahlsegmentes erfasst und die Position des Brenners automatisch in vertikaler Richtung und in Winkelstellung derart verändert, dass der erzeugte Brennschnitt entlang der durch die Form der Zarge vorgegebene Außenkontur unter Berücksichtigung des Luftspaltabstandes erfolgt, wobei sich die Brennschnittfase in Abhängigkeit von der Krümmung des Stahlsegmentes dynamisch verändert. Die Verstellungen des Brenners in vertikaler Richtung und in der Winkelstellung können synchron erfolgen.

Bei Ausführung einer Zarge mit zwei parallel beabstandeten geraden Abschnitten und zwei angrenzenden bogenförmigen Abschnitten (oben und unten) wird aufgrund der dynamischen Fase der Brennschnitt an den Längsseiten kürzer und an den bogenförmigen Seiten länger. Dadurch kann das Schweißvolumen beim nachfolgenden Schweißvorgang rund um die Zarge konstant gehalten werden, es kann überall mit der gleichen Anzahl an Lagen geschweißt werden. Dadurch verringert sich der Aufwand an Schweißmaterial und die Qualität der Schweißverbindung wird deutlich besser.

Bedingt durch die erzielbare gleichbleibende Brennschnittqualität verringert sich die Nacharbeit nach dem Schweißvorgang erheblich.

Während des Brennvorganges wird die aktuelle Krümmung des Stahlsegmentes vorzugsweise mittels getrennt angeordneter Führungsrollen erfasst, wobei über die eine Führungsrolle die Lage des Brenners in vertikaler Richtung und über die andere Führungsrolle die Winkelstellung des Brenners verändert wird.

Der Abstand zwischen Brenner und Außenwand der Zarge kann beispielsweise mittels einer horizontal verschiebbar gelagerten Zahnstange mit Führungsrad vorgenommen werden, wobei das Führungsrad während der Vorschubbewegung unter Anpressdruck in Berührungskontakt mit der Außenwand der Zarge steht.

Der Brenner ist in der zugehörigen Aufnahme schwenkbar gelagert. Der Anfangswinkel wird unmittelbar vor Beginn eingestellt. Während der Vorschubbewegung wird der Winkel des Brenners permanent über die Abtastbewegung des zugehörigen Führungsrades angepasst. Dadurch entsteht eine variable Fase. Der Durchstichpunkt der Brennerflamme auf der anderen Seite des zu brennenden Stahlsegmentes ist somit an jedem Punkt gleich weit von der Zarge entfernt. Der Drehpunkt des Brenners sollte hierbei so nah wie möglich am Einstichpunkt der Brennerflamme liegen, da es ansonsten zu geringen Abweichungen komm kann.

Eine zur Durchführung des Verfahrens geeignete Vorrichtung umfasst mindestens eine Führungseinheit und eine Trenneinheit, wobei die Führungseinheit aus einem Trägerrahmen und einem an diesem horizontal verschiebbar angeordneten Fahrwerk besteht. Das Fahrwerk ist so ausgeführt, dass dieses auf einer schmalen Stirnseite eines Bauteils bzw. der Zarge umlaufend verfahrbar ist. Bei dem zum Einsatz kommenden Fahrwerk handelt es sich um ein handelsübliches Aggregat.

Zur Trenneinheit gehört eine Schneideinrichtung, vorzugsweise ein Schneidbrenner. Die Trenneinheit ist vertikal verschiebbar an dem Trägerrahmen gelagert. Die Schneideinrichtung kann über Strukturabtastelemente während des Betriebszustandes in ihrer Position sowohl in vertikaler Richtung als auch in der Winkelstellung derart veränderbar werden, dass während des Schneidvorganges eine dynamische Trennfase entsteht.

Die Trenneinheit weist beabstandet zwei Halterungen auf, die mit je einer Führungsstange verbunden sind, die in am Trägerrahmen angeordneten Führungsbuchsen vertikal verschiebbar geführt sind.

Die beiden Halterungen sind über ein mit seiner Spitze nach unten gerichtetes Winkelelement verbunden, an dem ein zweites Führungsrad drehbar gelagert ist, das als Strukturabtastelement über Führungsstangen vertikal beweglich geführt ist.

Zwischen den beiden Halterungen ist eine Aufnahme für die Schneideinrichtung angeordnet, die über ein Kurvengelenk mit zwei Haltearmen an den Halterungen drehbeweglich gelagert ist. Die Verbindungsstellen zwischen den beiden Haltearmen bilden die Drehachse für die Aufnahme des Brenners.

An der Aufnahme ist eine nach unten abgewinkelte Strebe befestigt, an deren unterem Ende ein drittes Führungsrad drehbar gelagert ist, über das als Strukturabtastelement die Winkelstellung der Aufnahme und somit der Schneideinrichtung veränderbar ist.

An dem Trägerrahmen ist, im unteren Abschnitt, eine Halterung mit einer horizontal verschiebbaren Zahnstange angeordnet, wobei die Zahnstange an ihrem in Richtung Fahrwerk zeigenden Ende mit einem ersten Führungsrad verbunden ist. Über in Halterungen angeordnete Ritzel, die mit der Zahnstange in Eingriff stehen, kann die Zahnstange mit dem Führungsrad in horizontaler Richtung verstellt werden.

An dem Trägerrahmen sind Führungsstangen zur Aufnahme und horizontalen Verschiebbarkeit des Fahrwerks befestigt. Über am Trägerrahmen und Fahrwerk befestigbare Zugfedern lässt sich der Anpressdruck des ersten Führungsrades auf die Zarge einstellen.

Die Erfindung soll nachstehend an einem Ausführungsbeispiel näher erläutert werden. In der zugehörigen Zeichnung zeigen:

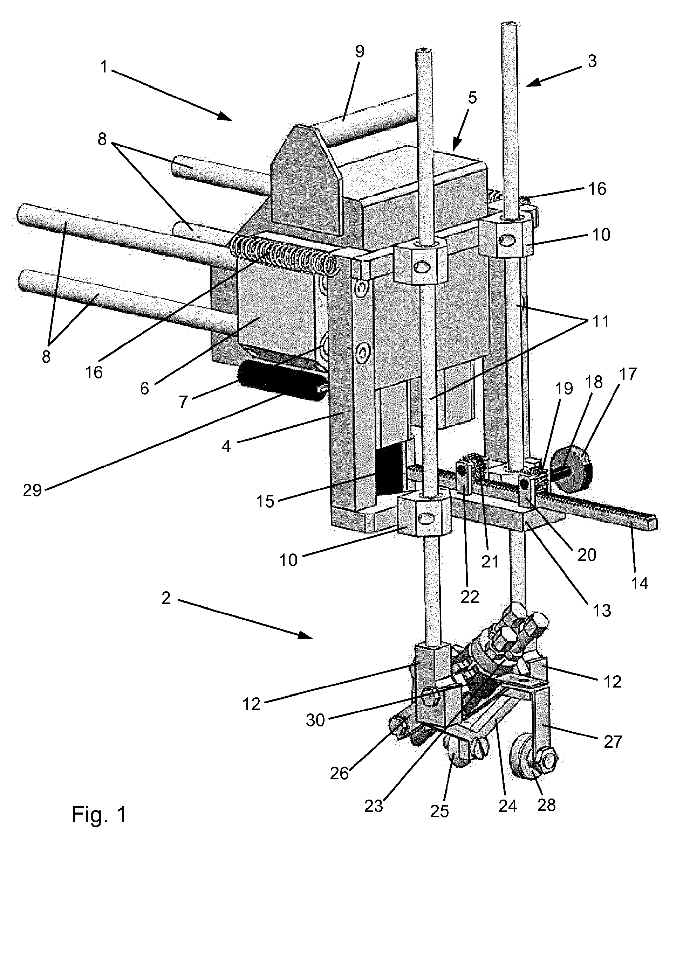

- Fig. 1: die erfindungsgemäße Vorrichtung in perspektivischer Darstellung,
- Fig. 2: die Trenneinheit der Vorrichtung gemäß Fig. 1, als Seitenansicht,
- Fig. 3: die erfindungsgemäße Vorrichtung im Betriebszustand, als Draufsicht in perspektivischer Darstellung,
- Fig. 4: die Anpassung des Brennerwinkels in der Position A gemäß Fig. 3, in vereinfachter Darstellung, und
- Fig. 5: die Anpassung des Brennerwinkels in der Position B gemäß Fig. 3, in vereinfachter Darstellung.

Die Vorrichtung besteht aus den beiden Hauptbaugruppen Führungseinheit 1 und Trenneinheit 2. Die beiden Baugruppen 1 und 2 sind über eine in der Höhe verstellbare Stangenführung 3 miteinander verbunden.

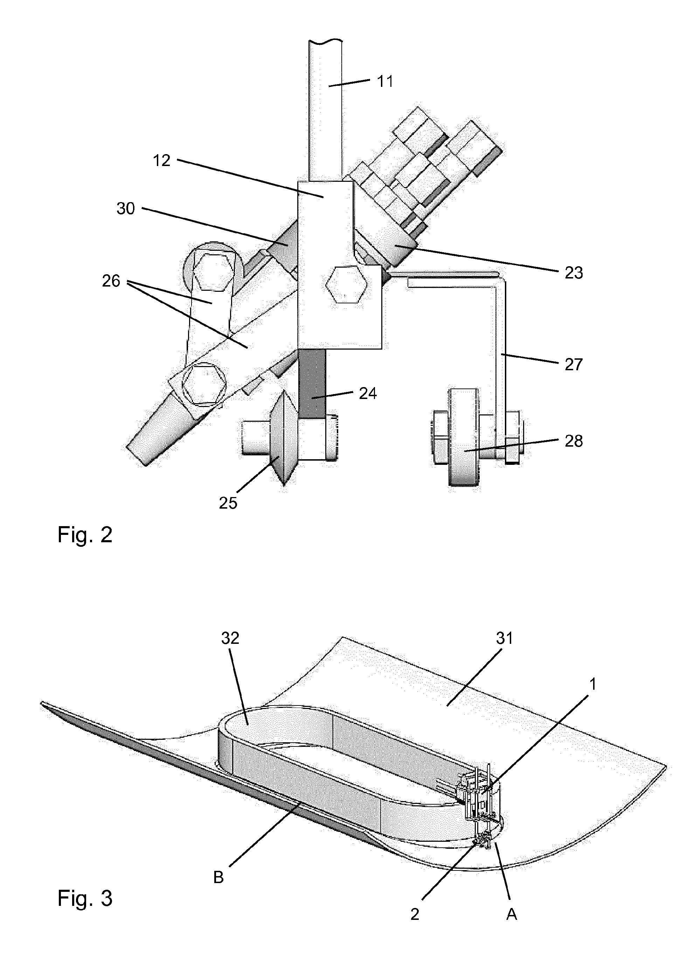

Zur Führungseinheit 1 gehören ein stabiler Trägerrahmen 4 und ein Fahrwerk 5, das auf der nach oben zeigenden Stirnseite eines entsprechenden Bauteils, der Zarge 32, aufgesetzt bzw. aufgespannt wird (Fig. 3) und umlaufend auf der Stirnseite der Zarge 32 verfahrbar ist. Das Fahrwerk 5 ist mit an der Vorder- und Rückseite, in Fahrtrichtung gesehen, jeweils einem Führungsschlitten 6 verbunden, in dem vertikal beabstandet zwei Kugelbuchsenführungen 7 als Doppelführung angeordnet sind. Die beiden Führungsschlitten 6 sind zusammen mit dem Fahrwerk 5 auf Führungsstangen 8 horizontal verschiebbar gelagert. Die Führungsstangen 8 sind im Trägerrahmen 4 fest verankert. Das Fahrwerk 5 kann so in horizontaler Richtung zur Anpassung an unterschiedliche Wanddicken der Zargen verschoben werden.

Am oberen Ende des Fahrwerkes 5 ist eine Halterung mit einem Tragbügel 9 angeordnet. Am Trägerrahmen 4 sind vier Führungsbuchsen 10 in rechteckförmiger Anordnung befestigt, wobei in jeweils zwei deckungsgleichen Führungsbuchsen 10 eine Führungsstange 11 vertikal beweglich geführt ist. An den unteren Enden der Führungsstangen 11 ist die Trenneinheit 2 mittels Halterungen 12 befestigt. Über die Führungsstangen 11 können die Führungseinheit 1 und die Trenneinheit 2 relativ zueinander bewegt werden.

Am unteren Abschnitt, zwischen den beiden Führungsbuchsen 10 des Trägerrahmens 4, befindet sich eine plattenförmige Halterung 13 für eine horizontal bewegbare Zahnstange 14, an deren in Richtung Zarge zeigendem Ende ein erstes Führungsrad 15 drehbeweglich angeordnet ist. Im Betriebszustand steht das Führungsrad 15 in ständigem Berührungskontakt mit der Außenwand der Zarge und dreht mit. Über am oberen Abschnitt des Trägerrahmens 4 angeordnete Zugfedern 16, wobei an jedem Führungsschlitten 6 eine Feder 16 angreift, wird der erforderliche Anpressdruck erzeugt.

Die Haupteinstellung des Abstandes zwischen dem Trägerrahmen 4 und der Außenwand der Zarge erfolgt über eine manuelle Betätigung eines Handrades 17, das über eine Welle 18 mit einem ersten Ritzel 19 verbunden ist. Die Welle 18 ist in einer Halterung 20 gelagert und das Ritzel 19 steht mit der Zahnstange 14 in Eingriff. Zur Verbesserung der Führungsstabilität ist noch ein zweites drehbares Ritzel 21 in einer weiteren Halterung 22 drehbar gelagert, das ebenfalls mit der Zahnstange 14 in Eingriff steht.

Die Trenneinheit 2 (Fig. 2) besteht aus den Halterungen 12, in denen eine Schneideinrichtung, ein Schweißbrenner 23 herkömmlicher Bauart, drehbeweglich in einer hülsenartigen Aufnahme 30 gelagert ist. Ferner gehören zur Trenneinheit 2 als wesentliche Elemente noch Mittel zur dynamischen Anpassung der Neigung und Höhe des Schweißbrenners 23 im laufenden Betrieb.

Zur Anpassung der Brennerposition an unterschiedliche Höhen, aufgrund der Krümmung des Turmsegmentes, ist am unteren Ende der Halterung 12 ein Winkelelement 24 befestigt, an dem ein zweites Führungsrad 25 drehbeweglich gehalten, das im Betriebszustand in ständigem Berührungskontakt mit der Innenfläche des Turmsegmentes 31 steht. Über das zweite Führungsrad 25 ist die gesamte Trenneinheit 2 über die in den Führungsbuchsen 10 geführten Führungsstangen 11 in vertikaler Richtung bewegbar.

Der Brenner 23 ist in der als Feststellschelle ausgebildeten Aufnahme 30 gehalten, die über ein Kurvengelenk mit zwei Haltearmen 26 an den Halterungen 12 drehgelenkig befestigt ist, wobei die Drehachse die Verbindungsstelle zwischen den zwei Haltearmen ist. Dadurch wird ein hoher Grad an freier Beweglichkeit des Brenners 23 erreicht.

An der Feststellschelle 30 ist eine winkelförmige Strebe 27 befestigt, an deren unterem Ende eine drittes Führungsrad 28 drehbar gelagert ist.

Dieses Führungsrad 28 steht im Betriebszustand ebenfalls ständig mit der Innenfläche des Turmsegmentes 31 in Berührungskontakt. Über dieses Führungsrad 28 erfolgt im laufenden Betrieb eine selbständige Anpassung der Winkelstellung des Brenners 23.

Die beiden Führungsräder 25 und 28, die im Betriebszustand in ständigem Kontakt mit der Innenseite des gekrümmten Stahl- bzw. Turmsegmentes stehen, sind in ihrer Funktion Strukturabtastelemente.

Der Verfahrensablauf zum Einbringen einer Türöffnung in ein Turmsegment aus Stahl für eine Windkraftanlage einschließlich Montage der Zarge wird nachfolgend, insbesondere unter Bezugnahme auf die Figuren 3 bis 5, erläutert.

Das vorgefertigte bogenförmige bzw. gekrümmte Turmsegment 31 wird auf einer Arbeitsfläche abgelegt und arretiert, wobei die Außenfläche auf der Arbeitsfläche aufliegt oder abgestützt ist. Danach wird die vorgefertigte Zarge 32 in der gewünschten Position auf der Innenseite des Turmsegmentes 31 positioniert.

Anschließend wird die erfindungsgemäße Vorrichtung auf die obere Stirnseite der Zarge 32 aufgesetzt und eingestellt. Die Transportrollen 29 des Fahrwerkes 5 liegen auf der Stirnseite der Zarge 32 auf.

In Abhängigkeit von der Wanddicke des Turmsegmentes muss vor Inbetriebnahme der Abstand des Brenners 23 zur Zarge 32 eingestellt werden. Zusätzlich ist dabei der einzuhaltende Luftspalt zwischen Zarge und der auszuschneidenden Turmsegmentöffnung zu berücksichtigen, um die Zarge später passgenau einsetzen zu können.

Dies erfolgt über die in der Halterung 13 angeordnete Verstellvorrichtung, wobei das Handrad 17 manuell betätigt und dadurch die Zahnstange 14 bewegt wird, bis zum Anschlag des Führungsrades 15 an der Außenwand der Zarge 32. Aufgrund der freien vertikalen und horizontalen Beweglichkeit von Führungs- und Trenneinheit über die jeweiligen Führungsstangen 11 und 8 ist der erforderliche Freiheitsgrad für die Einstellung gegeben. Gleichzeitig wird über die Abstützung der Trenneinheit auf der Turmsegmentfläche eine ausreichende Fahrstabilität erreicht.

Das Führungsrad 15 wird über die Federn 16 in Kontakt mit der Außenwandung der Zarge 32 gehalten, auch während der Vorschubbewegung des Fahrwerkes.

Anschließend werden das Fahrwerk 5 und die Brennerfunktion in Betrieb genommen.

Die Vorrichtung fährt einmal vollständig umlaufend auf der Zarge 32 entlang und brennt dabei zeitgleich konturgetreu gemäß der Zargenaußenkontur zzgl. Luftspaltabstand d den Trennschnitt in das Turmsegment 31, wie in Fig. 3 gezeigt. Danach wird die Vorrichtung ausgeschalten und abgenommen. Die Zarge 32 wird mittels Kran angehoben und das ausgebrannte Teilstück entfernt. Danach wird die Zarge in die Türöffnung abgesenkt und durch Schweißen in dem Turmsegment 31 befestigt.

Wesentlich für den Schneidvorgang zum Ausbrennen der Türöffnung ist die Berücksichtigung der Krümmung des Turmsegmentes, die bei einzelnen Turmsegmenten unterschiedlich sein kann.

Der Brennerwinkel muss während des gesamten Schneid- bzw. Brennvorganges ständig angepasst werden. Ohne diese Maßnahme würde der Brennschnitt unter die Zarge wandern und die Zarge ließe sich nicht in die ausgebrannte Öffnung einsetzen.

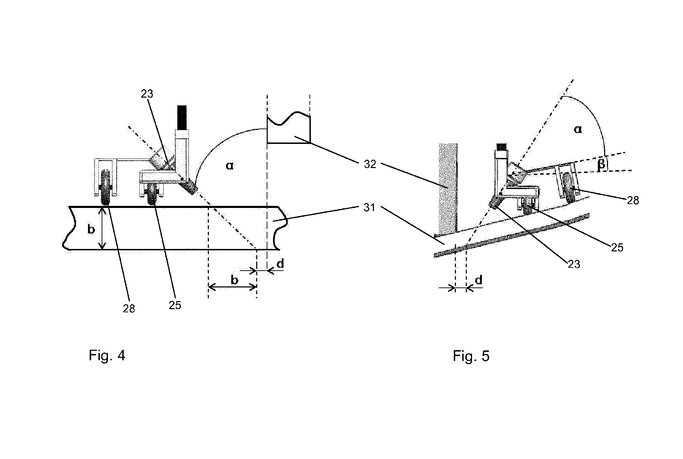

In den Figuren 4 und 5 ist die Winkeleinstellung der Brenner in zwei unterschiedlichen Positionen A und B (Fig. 3) dargestellt. Während der Vorschubbewegung des Fahrwerkes verändert sich der Winkel der Brennerachse, in Abhängigkeit von der gebogenen Struktur des Turmsegmentes.

Figur 4 zeigt die Position A, wo die Turmsegmentfläche noch einen relativ ebenen Verlauf aufweist.

Gemäß der Position B (Fig. 5) ist eine Stelle erreicht, an der die Turmsegmentfläche eine stärkere Krümmung aufweist.

In diesen beiden Figuren ist "b" die Wanddicke des Turmsegmentes, "d" der einzuhaltende Luftspalt, "α" der Ausgangswinkel (45°) und "β" der Anpassungswinkel.

Über die Führungsrollen 25 und 28 wird der Brenner 23 automatisch in die erforderliche Winkelposition (α + β) bewegt, sodass der Durchstichpunkt der Brennerflamme auf der anderen Seite der Schnittlinie des Turmsegmentes an jedem Punkt gleich weit von der Zarge entfernt ist.

Dadurch wird eine dynamische, also variable Fase gebildet, die den Vorteil hat, dass beim nachfolgenden Schweißvorgang zur Befestigung der Zarge das Schweißvolumen reduziert und nahezu konstant gehalten werden kann.

Dadurch verringert sich der Aufwand für den Schweißvorgang der Zargen und die Verbindung zwischen Turmsegment und Zarge erreicht eine höhere Festigkeit.

## Patentansprüche

1. Verfahren zum Einbringen einer Türöffnung in ein bogenförmiges Stahlsegment, insbesondere in ein Turmsegment einer Windkraftanlage, einschließlich Zargenmontage mit folgenden Verfahrensschritten:
a) eine vorgefertigte Zarge (32) wird stirnseitig auf der Innenseite eines bogenförmigen Stahlsegmentes (31) positioniert;
b) eine auf der nach oben zeigenden Stirnseite der Zarge (32) fahrbare Führungseinheit (1) mit einer vertikal verstellbaren Trenneinheit (2) mit einem in seinem Brennerwinkel verstellbarer Brenner (23) wird auf die Zarge (32) aufgesetzt;
c) die Führungseinheit (1) wird in Vorschubrichtung bewegt und der Brenner (23) in Betrieb genommen, wobei während der Vorschubbewegung der Brenner (23) selbständig seine Position an die Krümmung des Stahlsegmentes (31) anpasst und dabei die Öffnung zur Aufnahme der Zarge (32) in das Stahlsegment (31) eingebracht wird;
d) nach Beendigung eines umlaufenden Fahrzyklus wird die Zarge (32) angehoben und das ausgebrannte Teilstück entfernt und
e) anschließend wird die Zarge (32) in die ausgebrannte Öffnung des Stahlsegmentes (31) eingelassen und mit diesem verschweißt.

2. Verfahren nach Anspruch 1, **dadurch gekennzeichnet, dass** in Abhängigkeit von der Dicke des Stahlsegmentes (31) der Abstand zwischen Brenner (23) und Außenwand der Zarge (32) unter Berücksichtigung eines Luftspaltabstandes (d) eingestellt wird.

3. Verfahren nach einem der Ansprüche 1 oder 2, **dadurch gekennzeichnet, dass** während der Bewegung der Führungseinheit (1) in Vorschubrichtung die momentane Krümmung des Stahlsegmentes (31) erfasst und Position des Brenners (23) automatisch in vertikaler Richtung und in Winkelstellung, derart verändert wird, dass der erzeugte Brennschnitt entlang der durch die Form der Zarge (32) vorgegebene Außenkontur unter Berücksichtigung des Luftspaltes (d) erfolgt, wobei sich die Brennschnittfase in Abhängigkeit von der Krümmung des Stahlsegmentes (31) dynamisch verändert.

4. Verfahren nach einem der Ansprüche 1 bis 3, **dadurch gekennzeichnet, dass** die aktuelle Erfassung der Krümmung des Stahlsegmentes (31) mittels getrennt angeordneter Führungsrollen (25, 28) erfolgt, wobei über die eine Führungsrolle (25) die Lage des Brenners (23) in vertikaler Richtung und über die andere Führungsrolle (28) die Winkelstellung des Brenners (23) verändert wird.

5. Verfahren nach einem der Ansprüche 1 bis 4, **dadurch gekennzeichnet, dass** der Abstand zwischen Brenner (23) und Außenwand der Zarge (32) mittels einer horizontal verschiebbar gelagerten Zahnstange (14) mit Führungsrad (15) vorgenommen wird, wobei das Führungsrad (15) während der Vorschubbewegung unter Anpressdruck in Berührungskontakt mit der Außenwand der Zarge (32) steht.

6. Vorrichtung zur Durchführung des Verfahrens nach einem der Ansprüche 1 bis 5,
**dadurch gekennzeichnet, dass** diese mindestens eine Führungseinheit (1) und eine Trenneinheit (2) umfasst, wobei die Führungseinheit (1) aus einem Trägerrahmen (4) und einem an diesem horizontal verschiebbar angeordneten Fahrwerk (5) besteht, das auf einer schmalen Stirnseite eines Bauteils (32) umlaufend verfahrbar ist, und die Trenneinheit (2) vertikal verschiebbar an dem Trägerrahmen (4) gelagert ist, wobei die Trenneinheit (2) mit einer Schneideinrichtung (23) ausgerüstet ist, die über Strukturabtastelemente (25, 28) während des Betriebszustandes in ihrer Position sowohl in vertikaler Richtung als auch in der Winkelstellung derart veränderbar ist, dass während des Schneidvorganges eine dynamische Trennfase entsteht.

7. Vorrichtung nach Anspruch 6, **dadurch gekennzeichnet, dass** die Trenneinheit (2) beabstandet zwei Halterungen (12) aufweist, die mit je einer Führungsstange (11) verbunden sind, die in am Trägerrahmen (4) angeordneten Führungsbuchsen (10) vertikal verschiebbar geführt sind.

8. Vorrichtung nach einem der Ansprüche 6 oder 7, **dadurch gekennzeichnet, dass** die beiden Halterungen (12) über ein mit seiner Spitze nach unten gerichtetes Winkelelement (24) verbunden sind, an dem ein zweites Führungsrad (25) drehbar gelagert ist, das als Strukturabtastelement über die Führungsstangen (11) vertikal beweglich geführt ist.

9. Vorrichtung nach einem der Ansprüche 6 bis 8, **dadurch gekennzeichnet, dass** zwischen den Halterungen (12) eine Aufnahme (30) für die Schneideinrichtung (23) angeordnet ist, die über ein Kurvengelenk mit zwei Haltearmen (26) an den Halterungen (12) drehbeweglich gelagert ist.

10. Vorrichtung nach einem der Ansprüche 6 bis 9, **dadurch gekennzeichnet, dass** an der Aufnahme (30) eine nach unten abgewinkelte Strebe (27) befestigt ist, an deren unterem Ende ein drittes Führungsrad (28) drehbar gelagert ist, über das als Strukturabtastelement die Winkelstellung der Aufnahme und somit der Schneideinrichtung (23) veränderbar ist.

11. Vorrichtung nach einem der Ansprüche 6 bis 10, **dadurch gekennzeichnet, dass** an dem Trägerrahmen (4), im unteren Abschnitt, eine Halterung (13) mit einer horizontal verschiebbaren Zahnstange (14) angeordnet ist, wobei die Zahnstange (14) an ihrem in Richtung Fahrwerk (5) zeigenden Ende mit einem ersten Führungsrad (15) verbunden ist und über in Halterungen (20, 22) angeordnete Ritzel (19, 21), die mit der Zahnstange (14) in Eingriff stehen, in horizontaler Richtung verstellbar ist.

12. Vorrichtung nach einem der Ansprüche 6 bis 11, **dadurch gekennzeichnet, dass** an dem Trägerrahmen (4) Führungsstangen (8) zur Aufnahme und horizontalen Verschiebbarkeit des Fahrwerks (5) befestigt sind.

13. Vorrichtung nach einem der Ansprüche 6 bis 12, **dadurch gekennzeichnet, dass** am Trägerrahmen (4) und Fahrwerk (5) Zugfedern (16) befestigbar sind, über die ein Anpressdruck auf das erste Führungsrad (15) ausübbar ist.
